# EUROPEAN PATENT SPECIFICATION

(11) **EP 3 209 073 B1**
(45) Date of publication and mention of the grant of the patent: **16.09.2020**
(21) Application number: 15899252.9
(22) Date of filing: 29.07.2015
(51) Int. Cl.: H04W 56/00, H04W 48/08, H04W 52/00, H04W 76/00, H04W 24/02, H04W 84/04, H04W 88/04

(54) **SMALL BASE STATION AND COMMUNICATION CONTROL METHOD THEREFOR**
KLEINE BASISSTATION UND KOMMUNIKATIONSSTEUERUNGSVERFAHREN
PETITE STATION DE BASE ET PROCÉDÉ DE COMMANDE DE COMMUNICATION

(43) Date of publication of application: 23.08.2017
(73) Proprietor: Huawei Technologies Co., Ltd., Longgang District Shenzhen, Guangdong 518129 (CN)
(72) Inventor: LI, Yingtao, Shenzhen Guangdong 518129 (CN); YU, Rongdao, Shenzhen Guangdong 518129 (CN)
(74) Representative: Thun, Clemens
(86) International application number: PCT/CN2015/085437
(87) International publication number: WO 2017/015900

(56) References cited:
- WO-A1-2012/113131
- WO-A1-2015/076585
- CN-A- 101 075 848
- CN-A- 101 707 795
- CN-A- 101 778 463
- CN-A- 101 784 094
- CN-A- 103 220 815
- KR-A- 20110 050 359
- US-A1- 2011 128 916
- US-A1- 2014 226 541
- US-A1- 2014 226 636
- ZTE: "Discussion on the coexist of eIMTA and Small Cell DC", 3GPP DRAFT; R2-144251 DISCUSSION ON THE EIMTA AND SMALL CELL DC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Shanghai, China; 20141006 - 20141010 5 October 2014 (2014-10-05), XP050876487, Retrieved from the Internet: URL:http://www.3gpp.org/ftp/Meetings_3GPP_ SYNC/RAN2/Docs/ [retrieved on 2014-10-05]

## Description

### TECHNICAL FIELD

The present invention relates to communication control methods on a wireless communications network, and in particular, to a small cell station and a communication control method thereof.

### BACKGROUND

With development and popularization of smartphones, data traffic of mobile communications is steadily on the rise. Particularly, as people increasingly use applications, such as microblog, WeChat, Facebook (Facebook), and Twitter (Twitter), it becomes increasingly hard for conventional cellular communications to meet ever-increasing communication traffic required by people. According to statistics, in global mobile communications, approximately 70% data traffic is generated indoors. This shows that most broadband data traffic of people, such as that for video services, online games, microblog browsing, and WeChat, is generated in indoor environments. Therefore, it is particularly important to improve indoor signal coverage and indoor user experience for an indoor subscriber. In recent years, small cell stations have drawn wide attention in the communications industry. A small cell station is a small-sized low-power base station, and can provide, based on existing 3G and 4G wireless standard protocols, wireless communications services for mobile terminals. Small cell stations are mainly deployed in public places such as shopping malls, offices, and coffee houses, or inside homes. The small cell station can make up for an indoor coverage shortage of a macrocell station, and avoid difficulties in site selection for the macrocell station. In addition, compared with the macrocell station, the small cell station can perform transmission at lower power, and therefore, the small cell station is more environmentally friendly.

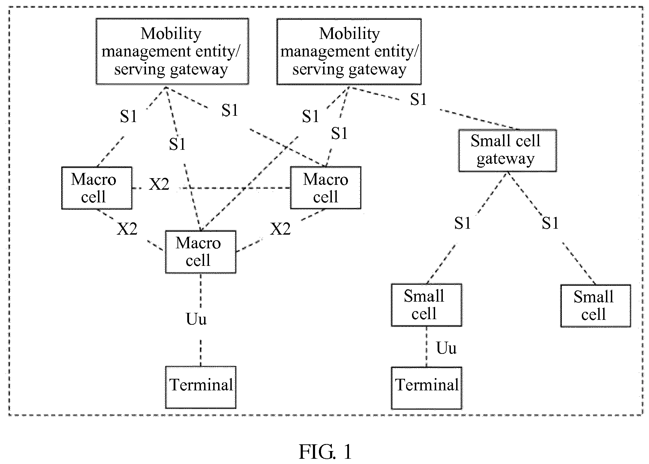

In the prior art, a small cell station acts as a small-sized based station with low power consumption to provide communications services for mobile subscribers. As shown in FIG. 1, the small cell station is connected to a Mobility Management Entity (MME)/Serving Gateway (SGW) by using a small cell station gateway, to connect to a core network. In addition, the small cell station provides wireless communications services for terminals within coverage of the small cell station. An S1 interface exists between a macrocell station and the MME/SGW, and an X2 interface exists between macrocell stations. A macrocell station is connected to the core network by using the MME/SGW, and provides wireless communications services for terminals within coverage of the macrocell station.

However, in the prior art, no communications interface exists between small cell stations or between a small cell station and a macrocell station. Consequently, on one hand, a small cell station cannot obtain related information such as a working frequency, a frequency band, and a neighboring cell list of a macrocell station; on the other hand, the macrocell station cannot obtain related information such as a working frequency, an operating environment, and communication performance of the small cell station either. Therefore, it is inconvenient for an operator to perform configuration management, performance optimization, interference coordination management, and fault detection, and the like for a small cell station.

WO 2012/113131 A1 discloses a dynamic uplink/downlink configuration for time division duplex.

US 2014/226636 A1 and US 2014/226541 A1 disclose a design for small cell demodulation reference signal and initial synchronization.

US 2011/128916 A1 discloses a method for self-configuring a cellular infrastructure as desired, and a device therefor.

WO 2015/076585 A1 discloses a method and an apparatus for performing synchronization by a cell based on network listening.

### SUMMARY

The invention is defined by the appended claims. Embodiments of the present invention provide a small cell station and a communication control method thereof, so as to implement convenient configuration management for a small cell station by using an air interface between the small cell station and a macrocell station.

According to a first aspect, a communication control method of a small cell station is provided, where the method includes:
connecting, by the small cell station by using a built-in soft SIM card or an inserted SIM card of the small cell station, to a Uu air interface of a macrocell station to access the macrocell station;
after receiving a broadcast synchronization signal of the macrocell station, synchronizing, by the small cell station, with the macrocell station, and acquiring configuration information of the macrocell station, wherein the configuration information of the macrocell station comprises system information of the macrocell station, the system information of the macrocell station comprises a working frequency of the macrocell station; and
performing, by the small cell station, system configuration for the small cell station according to the configuration information of the macrocell station;
wherein the performing, by the small cell station, system configuration for the small cell station according to the configuration information of the macrocell station comprises:
   configuring a working frequency of the small cell station to be the same as the working frequency of the macrocell station.

With reference to the first aspect, in a first implementation manner of the first aspect, the system information of the macrocell station further includes an uplink-to-downlink subframe configuration ratio in time division multiplexing (TDD, Time Division Duplexing).

With reference to the first implementation manner of the first aspect, in a second implementation manner of the first aspect, the performing, by the small cell station, system configuration for the small cell station according to the configuration information of the macrocell station further includes:
configuring an uplink-to-downlink subframe configuration ratio of the small cell station in time division multiplexing to be the same as the uplink-to-downlink subframe configuration ratio of the macrocell station in time division multiplexing.

With reference to the first aspect or the first to the second implementation manners of the first aspect, in a third implementation manner of the first aspect, the configuration information of the macrocell station further includes a physical cell identifier of the macrocell station and system information of a neighboring cell of the macrocell station, and the system message of the neighboring cell of the macrocell station includes at least three physical cell identifiers of the neighboring cell of the macrocell station.

With reference to the third implementation manner of the first aspect, in a fourth implementation manner of the first aspect, the performing, by the small cell station, system configuration for the small cell station according to the configuration information of the macrocell station further includes:
determining that a configured physical cell identifier of the small cell station is different from the physical cell identifier of the macrocell station and the physical cell identifiers of the neighboring cell of the macrocell station.

According to a second aspect, a small cell station is provided, wherein the small cell station is configured to connect, by using a built-in soft SIM card or an inserted SIM card, to an air interface of a macrocell station to access the macrocell station, and includes:
a synchronization receiving module, configured to: after receiving a broadcast synchronization signal of the macrocell station, synchronize with the macrocell station, and acquire configuration information of the macrocell station, wherein the configuration information of the macrocell station comprises system information of the macrocell station, the system information of the macrocell station comprises a working frequency of the macrocell station; and
a configuration module, configured to perform system configuration for the small cell station according to the configuration information of the macrocell station; and
wherein the configuration module is further configured to:
   configure a working frequency of the small cell station to be the same as the working frequency of the macrocell station.

A SIM card is added to a small cell station provided in the embodiments of the present invention, so that the small cell station can access a macrocell station in a terminal form, which is equivalent to addition of a Uu air interface between the small cell station and the macrocell station. Therefore, configuration management, performance optimization, admissible subscriber configuration, and the like are implemented for the small cell station by using this air interface.

### BRIEF DESCRIPTION OF DRAWINGS

FIG. 1 is a schematic diagram of wireless network communications in the prior art;
FIG. 2 is a schematic diagram of wireless network communications according to the present invention;
FIG. 3 is a schematic flowchart of a communication control method according to Embodiment 1 of the present invention;
FIG. 4 is a schematic diagram of a small cell station according to Embodiment 2 of the present invention;
FIG. 5 is a schematic flowchart of a method for configuring a subscriber admissible to a small cell station according to Example 1;
FIG. 6 is a schematic flowchart of a data transmission method according to Example 2;
FIG. 7 is flow block diagram of an interference coordination management method of a small cell station according to Example 3; and
FIG. 8 is schematic diagram of the interference coordination management method of a small cell station according to Example 3.

### DESCRIPTION OF EMBODIMENTS

The following further details the technical solutions of the present invention with reference to the accompanying drawings and embodiments.

In an existing wireless communications system, a small cell station cannot directly communicate with a macrocell station because no communications interface exists between them. However, a small cell station and a macrocell station are not independent of each other on a network, but coexist on one network and affect each other. Therefore, how small cell stations or how a small cell station and a macrocell station communicate with each other to implement automatic configuration is a concern of the present invention.

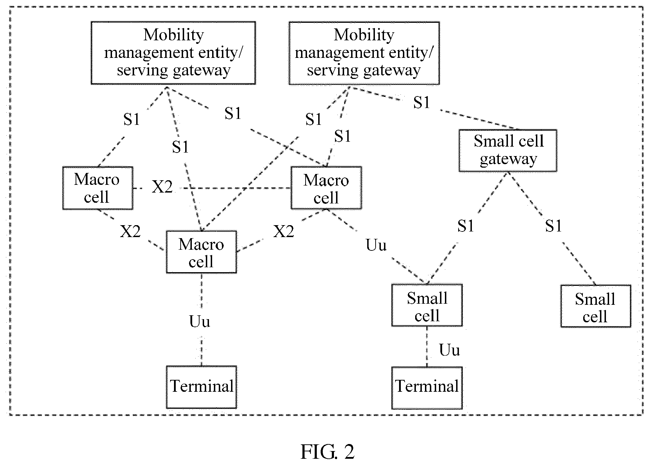

Referring to FIG. 2, in the embodiments of the present invention, a small cell station is a small-sized base station having relatively low power, and is mainly deployed indoors. The small cell station provides wireless communications services for terminals within relatively small coverage. A wireless protocol standard used for an air interface of the small cell station may be an existing 4G (The 4th Generation) or LTE (Long Term Evolution, Long Term Evolution) technical standard, or may be the LTE-based LTE-Advanced (Long Term Evolution Advanced, Long Term Evolution Advanced) technical standard, or may be the future fifth generation communications technology 5G (The 5th Generation) technical standard. A terminal within coverage of the small cell station accesses the small cell station by using a Uu air interface between the terminal and the small cell station, and then accesses a core network by using a small cell station gateway. The small cell station is connected to the small cell station gateway by using an S1 interface. The small cell station gateway is responsible for aggregating and forwarding signaling and data between the small cell station and the core network. A macrocell station is a higher-power base station deployed outdoors with coverage up to several kilometers or even tens of kilometers. A macrocell station provides wireless communications services for terminals and small cell stations by using a Uu air interface. Macrocell stations are connected to each other by using an X2 interface. The macrocell station is connected to a mobility management entity (MME)/serving gateway (SGW) by using an S1 interface. The MME/SGW is responsible for managing subscriber mobility, and routing and forwarding data packets of subscribers. In addition, it should be pointed out that the MME/SGW refers to an MME or an SGW.

In addition, the small cell station has a built-in soft SIM card (Subscriber Identity Module, subscriber identity module) or an inserted SIM card. A globally unique identity of the small cell station is built in the SIM card. By using the SIM, the small cell station can access the macrocell station in a terminal form, and communicate with the macrocell station by using the Uu air interface between the small cell station and the macrocell station. In this way, authentication, configuration management, performance optimization control, interference coordination management, and the like can be performed for the small cell station by using a cellular connection.

### Embodiment 1

As shown in FIG. 2, in a communication control method according to Embodiment 1 of the present invention, a small cell station has a built-in soft SIM card or an inserted SIM card. A globally unique identity of the small cell station is built in the SIM card. By using the SIM, the small cell station can access an air interface in a terminal form, and synchronize with and access a macrocell station by using the air interface of the macrocell station, to obtain system information of the macrocell station and physical cell identifiers of the macrocell station and of a neighboring cell; and perform configuration management for the small cell station according to the obtained system information of the macrocell station and the obtained physical cell identifiers of the macrocell station and of the neighboring cell. In addition, after the built-in soft SIM card or the inserted SIM card is provided, the small cell station is provided with a globally unique identity, which provides great convenience for an operator to perform monitoring and management operations for the small cell station.

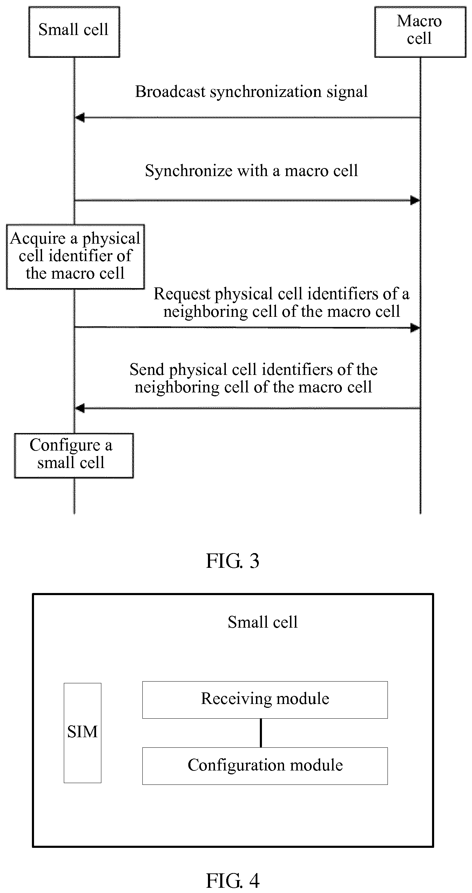

Also referring to FIG. 3, the communication control method mainly includes the following steps:
Step 101. A small cell station connects, by using a built-in soft SIM card or an inserted SIM card, to a Uu air interface of a macrocell station to access the macrocell station.

Step 102. After receiving a broadcast synchronization signal of the macrocell station, the small cell station synchronizes with the macrocell station, and acquires configuration information of the macrocell station.

Step 103. The small cell station performs system configuration for the small cell station according to the configuration information of the macrocell station.

The configuration information includes a physical cell identifier of the macrocell station, system information of the macrocell station, and system information of a neighboring cell of the macrocell station.

The system information of the macrocell station includes a working frequency and an uplink-to-downlink subframe configuration ratio in time division multiplexing (TDD, Time Division Duplexing) of the macrocell station. The synchronization signal may be one synchronization signal, or may be synchronization signals that include two levels of signals, such as a primary synchronization signal and a secondary synchronization signal. The small cell station sends a request message to the macrocell station, and receives physical cell identifiers of the neighboring cell that are sent by the macrocell station. There are at least three physical cell identifiers of the neighboring cell, and the request message is a request for the physical cell identifiers of the neighboring cell of the macrocell station from the macrocell station.

The small cell station performs system configuration for the small cell station according to the physical cell identifier of the macrocell station, the system information of the macrocell station, and the physical cell identifiers of the neighboring cell of the macrocell station. In this way, automatic configuration of the small cell station can be implemented. In addition, a working frequency of the small cell station may be configured to be the same as the working frequency of the macrocell station, and an uplink-to-downlink subframe configuration ratio in time division multiplexing of the small cell station may be configured to be the same as the configuration ratio of the macrocell station. Moreover, it is ensured that a physical cell identifier of the small cell station is different from the physical cell identifier of the macrocell station and the physical cell identifiers of the neighboring cell of the macrocell station. In this way, frequency resource utilization on an entire network is high, and effective coordination with the macrocell station is implemented to avoid interference and generate higher frequency utilization.

It can be seen that, in this embodiment of the present invention, a SIM card and a corresponding SIM communications apparatus are added to a small cell station, so that the small cell station can access a macrocell station in a terminal form, which is equivalent to that a Uu air interface is added between the small cell station and the macrocell station, so that communication and interaction between the small cell station and the macrocell station are established by using this air interface. In this way, the small cell station can perform configuration management, performance optimization, admissible subscriber configuration, and the like for the macrocell station, and further, configuration management of the small cell station is more convenient and more appropriate and utilization of frequency resources of a system is higher.

### Embodiment 2

As shown in FIG. 4, a small cell station in Embodiment 2 of the present invention connects, by using a built-in soft SIM or an inserted SIM card, to an air interface of a macrocell station to access the macrocell station. The small cell station includes:
a synchronization receiving module, configured to: after receiving a broadcast synchronization signal of the macrocell station, synchronize with the macrocell station, and acquire configuration information of the macrocell station; and
a configuration module, configured to perform system configuration for the small cell station according to the configuration information of the macrocell station.

The configuration information includes a physical cell identifier of the macrocell station, system information of the macrocell station, and system information of a neighboring cell of the macrocell station.

The system information of the macrocell station includes a working frequency and an uplink-to-downlink subframe configuration ratio in time division multiplexing (TDD, Time Division Duplexing) of the macrocell station. The synchronization signal may be one synchronization signal, or may be synchronization signals that include two levels of signals, such as a primary synchronization signal and a secondary synchronization signal.

The macrocell station sends a request message, and receives, by using the receiving module, physical cell identifiers of the neighboring cell that are sent by the macrocell station. There are at least three physical cell identifiers of the neighboring cell, and the request message is a request for the physical cell identifiers of the neighboring cell of the macrocell station from the macrocell station.

The configuration module may configure system settings of the small cell station, according to the physical cell identifier of the macrocell station, the system information of the macrocell station, and the physical cell identifiers of the neighboring cell of the macrocell station.

The synchronization module may be further configured to: configure a working frequency of the small cell station to be the same as the working frequency of the macrocell station, configure an uplink-to-downlink subframe configuration ratio in time division multiplexing of the small cell station to be the same as the configuration ratio of the macrocell station, and determine that a configured physical cell identifier of the small cell station is different from the physical cell identifier of the macrocell station and the physical cell identifiers of the neighboring cell of the macrocell station.

It can be seen that, a SIM card and a corresponding SIM communications apparatus are added to a small cell station, so that the small cell station can access a macrocell station in a terminal form, which is equivalent to that a Uu air interface is added between the small cell station and the macrocell station, so that communication and interaction between the small cell station and the macrocell station are established by using this air interface. In this way, the small cell station can perform configuration management, performance optimization, admissible subscriber configuration, and the like for the macrocell station. Further, configuration management of the small cell station is more convenient and more appropriate and utilization of frequency resources of a system is higher.

### Example 1

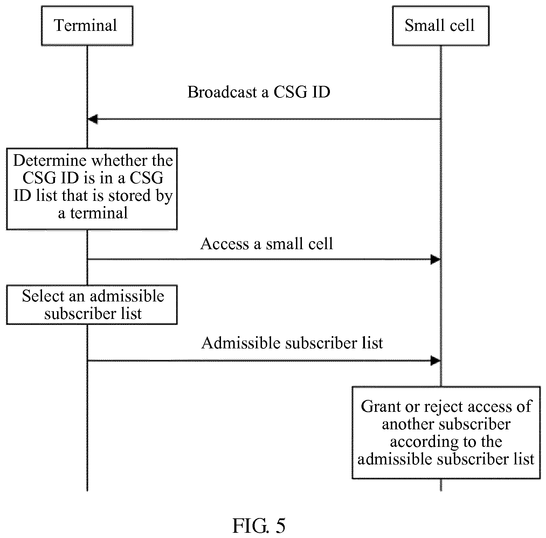

As shown in FIG. 5, in a method for configuring a subscriber admissible to a small cell station according to Example 1, on a basis that the small cell station has a built-in soft SIM card or an inserted SIM card, a connection is established by using an air interface between the small cell station and a macrocell station, so that a subscriber admissible to a small cell station can be configured by using a communications link between a terminal device and the macrocell station and a communications link between the small cell station and the macrocell station.

The foregoing method for configuring a subscriber admissible to a small cell station includes:
Step 201. The small cell station broadcasts a closed subscriber group identity (CSG ID, Closed Subscriber Group Identity) of the small cell station, where only a terminal belonging to the closed subscriber group is allowed to access the small cell station, and the small cell station has a built-in soft SIM card or an inserted SIM card, and the small cell station establishes a connection to a macrocell station by using an air interface.

Step 202. A terminal receives the closed subscriber group identity broadcast by the small cell station, determines whether the closed subscriber group identity is in a closed subscriber group identity list that is stored by the terminal, and if yes, accesses the small cell station.

Step 203. The terminal selects one or more subscribers from a subscriber list or a contact list of the terminal to form an admissible subscriber list, sends the admissible subscriber list to the small cell station, and indicates that a subscriber in the admissible subscriber list is a subscriber that is allowed to access the small cell station, where the admissible subscriber list includes mobile numbers of the one or more subscribers.

Step 204. The small cell station receives an access request of another terminal after receiving the admissible subscriber list of the terminal; and allows the another terminal to access the small cell station if the another terminal is in the admissible subscriber list, or otherwise, rejects access of the another terminal to the small cell station.

In addition, by using a Uu air interface between the small cell station and the macrocell station, the terminal may further select, according to the closed subscriber group identity that is obtained by the terminal from the small cell station, a list of subscribers allowed to access the small cell station from the contact list, and transmit the subscriber list to the small cell station by using a link between the terminal and the macrocell station and a link between the macrocell station and the small cell station. Then the small cell station accepts or rejects access of another subscriber according to the subscriber list.

### Example 2

As shown in FIG. 1, a conventional process of transmitting data of a subscriber of a small cell station is generally: A terminal accesses the small cell station, and data of the terminal is transmitted to the small cell station by using an air interface between the terminal and the small cell station, then to a small cell station gateway by using an interface between the small cell station and the small cell station gateway, and then to a core network by using the small cell station gateway.

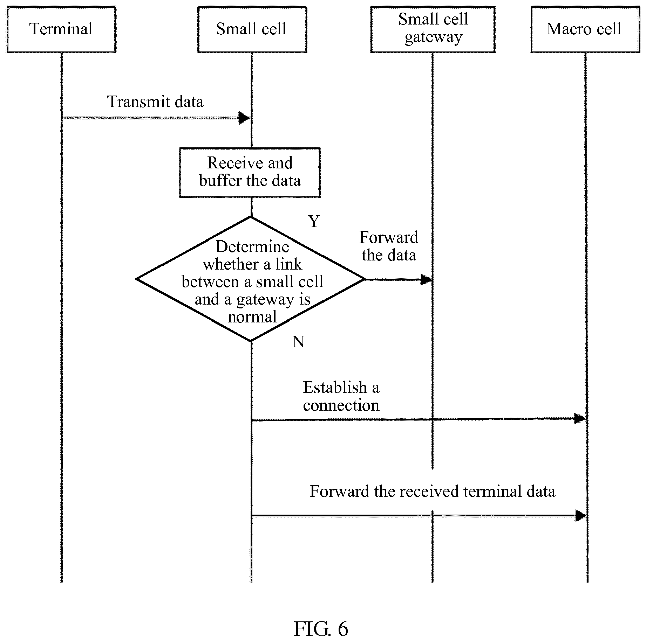

Referring to both FIG. 2 and FIG. 6, in a data transmission method in this example, a small cell station has a soft SIM card or an inserted SIM card, and a link formed by using an air interface exists between the small cell station and a macrocell station. Therefore, when detecting that a fault occurs on a link between the small cell station and a small cell station gateway or between a small cell station gateway and an MME/SGW, the small cell station establishes a connection between the small cell station and the macrocell station, and forwards received terminal subscriber data by using the link between the small cell station and the macrocell station. In this way, service continuity is ensured.

The data transmission method includes the following steps:
Step 301. A small cell station establishes a connection to a terminal, and receives data transmitted by the terminal.

Step 302. Determine whether a link between the small cell station and a small cell station gateway or between a small cell station gateway and an MME/SGW or between an MME/SGW and a next node is normal; and if a determining result is that the link is normal, the small cell station sends, to the small cell station gateway, the received data transmitted by the terminal, or otherwise, the small cell station sends the data to the MME/SGW by using a link between the small cell station and a macrocell station and by means of forwarding by the macrocell station, where the link between the small cell station and the macrocell station is established by the small cell station by using an air interface of the macrocell station.

Whether the link is normal is mainly determined by detecting whether the sending fails or whether a transmission speed is abnormally low.

### Example 3

In an interference coordination management method of a small cell station according to Example 3, a small cell station has a soft SIM card or a SIM card, and a link formed by using an air interface exists between the small cell station and a macrocell station.

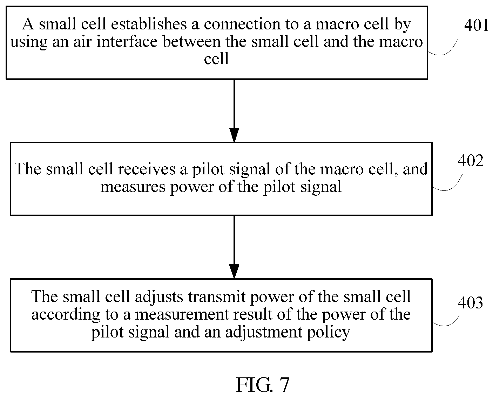

As shown in FIG. 7, the interference coordination management method of a base station includes the following steps:
Step 401. The small cell station establishes a connection to a macrocell station by using an air interface between the small cell station and the macrocell station.

Step 402. The small cell station receives a pilot signal of the macrocell station, and measures power of the pilot signal.

Step 403. The small cell station adjusts transmit power of the small cell station according to a measurement result of the power of the pilot signal and an adjustment policy, where the adjustment policy is that when the measured power of the pilot signal of the macrocell station is greater than a threshold, the small cell station adjusts the transmit power to first transmit power, and when the measured power of the pilot signal of the macrocell station is less than the threshold, the small cell station adjusts the transmit power to second transmit power, where maximum transmit power of the small cell station > the first transmit power > the second transmit power > zero.

The threshold is preset. The threshold may be adjusted continuously in a test process until an appropriate threshold is selected to minimize mutual interference between the macrocell station and the small cell station.

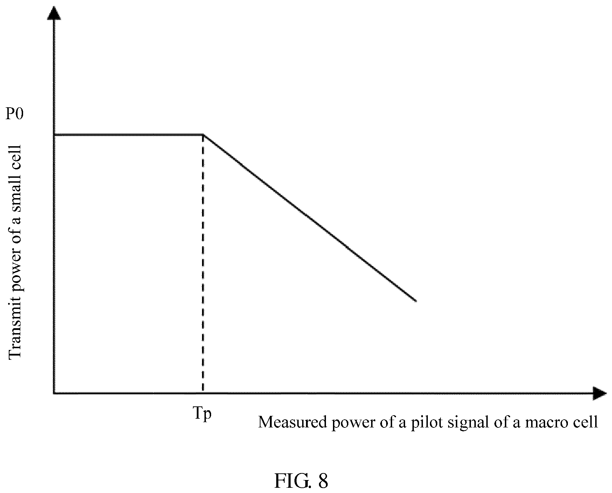

As shown in FIG. 8, when the power, which is measured by the small cell station, of the pilot signal of the macrocell station is less than a threshold Tp, the small cell station performs transmission at power P0, where P0 is less than maximum power of the small cell station. When the measured power of the pilot signal of the macrocell station is greater than the threshold Tp, the small cell station decreases a transmit power to be less than P0. In this way, frequent handover of a subscriber between the small cell station and the macrocell station can be avoided, and interference between the small cell station and the macrocell station can also be effectively managed and coordinated.

In addition, the small cell station divides a system bandwidth of the small cell station into multiple frequency bands for transmission of subscriber data. The small cell station measures interference signal strengths on different frequency bands, and schedules, according to the interference signal strengths on the different frequency bands, a frequency band with a low interference signal strength for transmission of the subscriber data.

For example, the small cell station schedules and transmits subscriber data at a given system bandwidth. A bandwidth of 20 MHz is used as an example. Generally, the system bandwidth (20 MHz) is divided into multiple frequency bands. For example, the bandwidth of 20 MHz is divided into 20 frequency bands, and a bandwidth of 1 MHz is for each frequency band. The small cell station schedules data transmission for multiple subscribers, and each subscriber occupies one or more frequency bands. The small cell station measures interference signal strengths on different frequency bands, and schedules, according to the interference signal strengths on the frequency bands, a frequency band with a low interference signal strength for transmission of the subscriber data. If the small cell station finds that signal interference on some frequency bands are particularly strong, the small cell station may evade these frequency bands with strong interference, and schedule a frequency band with weaker interference for transmission of the subscriber. In this way, reliability of data transmission can be ensured, and a data transmission error resulting from strong interference is avoided.

In the foregoing specific implementation manners, the objective, technical solutions, and benefits of the present invention are further described in detail. It should be understood that the foregoing descriptions are merely specific implementation manners of the present invention, but are not intended to limit the protection scope of the present invention.

## Claims

1. A communication control method of a small cell station, the method comprising the method steps of:
connecting, by the small cell station by using a built-in soft SIM card or an inserted SIM card of the small cell station, to an air interface of a macrocell station to access the macrocell station;
after receiving a broadcast synchronization signal of the macrocell station, synchronizing, by the small cell station, with the macrocell station, and acquiring configuration information of the macrocell station, wherein the configuration information of the macrocell station comprises system information of the macrocell station, the system information of the macrocell station comprises a working frequency of the macrocell station; and
performing, by the small cell station, system configuration for the small cell station according to the configuration information of the macrocell station;
wherein the performing, by the small cell station, system configuration for the small cell station according to the configuration information of the macrocell station comprises:
configuring a working frequency of the small cell station to be the same as the working frequency of the macrocell station.

2. The communication control method according to claim 1, wherein the system information of the macrocell station further comprises an uplink-to-downlink subframe configuration ratio inTime division Duplexing, TDD.

3. The communication control method according to claim 2, wherein the performing, by the small cell station, system configuration for the small cell station according to the configuration information of the macrocell station further comprises:
configuring an uplink-to-downlink subframe configuration ratio of the small cell station in time division multiplexing to be the same as the uplink-to-downlink subframe configuration ratio of the macrocell station in time division multiplexing.

4. The communication control method according to any one of claims 1 to 3, wherein the configuration information of the macrocell station further comprises a physical cell identifier of the macrocell station and system information of a neighboring cell of the macrocell station, and the system information of the neighboring cells of the macrocell station comprises at least three physical cell identifiers of the neighboring cell of the macrocell station.

5. The communication control method according to claim 4, wherein the performing, by the small cell station, system configuration for the small cell station according to the configuration information of the macrocell station further comprises:
configuring a configured physical cell identifier of the small cell station different from all of the physical cell identifier of the macrocell station and the physical cell identifiers of the neighboring cell of the macrocell station.

6. A small cell station, wherein the small cell station is configured to connect, by using a built-in soft SIM or an inserted SIM card, to an air interface of a macrocell station to access the macrocell station, and comprises:
a synchronization receiving module, configured to: after receiving a broadcast synchronization signal of the macrocell station, synchronize with the macrocell station, and acquire configuration information of the macrocell station, wherein the configuration information of the macrocell station comprises system information of the macrocell station, the system information of the macrocell station comprises a working frequency of the macrocell station; and
a configuration module, configured to perform system configuration for the small cell station according to the configuration information of the macrocell station; and
wherein the configuration module is further configured to:
configure a working frequency of the small cell station to be the same as the working frequency of the macrocell station.

7. The small cell station according to claim 6, wherein the system information of the macrocell station further comprises an uplink-to-downlink subframe configuration ratio in Time Division Multiplexing, TDD.

8. The small cell station according to claim 7, wherein the configuration module is further configured to:
configure an uplink-to-downlink subframe configuration ratio of the small cell station in time division multiplexing to be the same as the uplink-to-downlink subframe configuration ratio of the macrocell station in time division multiplexing.

9. The small cell station according to any one of claims 6 to 8, wherein the configuration information of the macrocell station further comprises a physical cell identifier of the macrocell station and system information of a neighboring cell of the macrocell station, and the system message of the neighboring cell of the macrocell station comprises at least three physical cell identifiers of the neighboring cell of the macrocell station.

## Patentansprüche

1. Kommunikationssteuerverfahren einer Kleinzellenstation, wobei das Verfahren die Folgenden Verfahrensschritte umfasst:
Verbinden, durch die Kleinzellenstation durch Verwenden einer integrierten Soft-SIM-Karte oder einer eingeführten SIM-Karte der Kleinzellenstation, mit einer Luftschnittstelle einer Makrozellenstation, um auf die Makrozellenstation zuzugreifen;
nach Empfangen eines Rundfunk-Synchronisationssignals der Makrozellenstation, Synchronisieren, durch die Kleinzellenstation, mit der Makrozellenstation und Erfassen von Konfigurationsinformationen der Makrozellenstation, wobei die Konfigurationsinformationen der Makrozellenstation Systeminformationen der Makrozellenstation umfassen, wobei die Systeminformationen der Makrozellenstation eine Arbeitsfrequenz der Makrozellenstation umfassen; und
Durchführen, durch die Kleinzellenstation, einer Systemkonfiguration für die Kleinzellenstation gemäß den Konfigurationsinformationen der Makrozellenstation; wobei das Durchführen, durch die Kleinzellenstation, einer Systemkonfiguration für die Kleinzellenstation gemäß den Konfigurationsinformationen der Makrozellenstation Folgendes umfasst:
derartiges Konfigurieren einer Arbeitsfrequenz der Kleinzellenstation, dass sie die gleiche wie die Arbeitsfrequenz der Makrozellenstation ist.

2. Kommunikationssteuerverfahren nach Anspruch 1, wobei die Systeminformationen der Makrozellenstation ferner ein Aufwärtsstrecke-zu-Abwärtsstrecke-Unterrahmen-Konfigurationsverhältnis im Zeitmultiplex-Duplex, TDD, umfassen.

3. Kommunikationssteuerverfahren nach Anspruch 2, wobei das Durchführen, durch die Kleinzellenstation, einer Systemkonfiguration für die Kleinzellenstation gemäß den Konfigurationsinformationen der Makrozellenstation ferner Folgendes umfasst:
derartiges Konfigurieren eines Aufwärtsstrecke-zu-Abwärtsstrecke-Unterrahmen-Konfigurationsverhältnisses der Kleinzellenstation im Zeitmultiplex, dass es das gleiche wie das Aufwärtsstrecke-zu-Abwärtsstrecke-Unterrahmen-Konfigurationsverhältnis der Makrozellenstation im Zeitmultiplex ist.

4. Kommunikationssteuerverfahren nach einem der Ansprüche 1 bis 3, wobei die Konfigurationsinformationen der Makrozellenstation ferner eine physische Zellenkennung der Makrozellenstation und Systeminformationen einer Nachbarzelle der Makrozellenstation umfassen und die Systeminformationen der Nachbarzellen der Makrozellenstation mindestens drei physische Zellenkennungen der Nachbarzelle der Makrozellenstation umfassen.

5. Kommunikationssteuerverfahren nach Anspruch 4, wobei das Durchführen, durch die Kleinzellenstation, einer Systemkonfiguration für die Kleinzellenstation gemäß den Konfigurationsinformationen der Makrozellenstation ferner Folgendes umfasst:
Konfigurieren einer konfigurierten physischen Zellenkennung der Kleinzellenstation, die sich von allen der physischen Zellenkennung der Makrozellenstation und der physischen Zellenkennungen der Nachbarzelle der Makrozellenstation unterscheidet.

6. Kleinzellenstation, wobei die Kleinzellenstation ausgelegt ist zum Verbinden, durch Verwenden einer integrierten Soft-SIM-Karte oder einer eingeführten SIM-Karte, mit einer Luftschnittstelle einer Makrozellenstation, um auf die Makrozellenstation zuzugreifen, und Folgendes umfasst:
ein Synchronisationsempfangsmodul, das zu Folgendem ausgelegt ist: nach Empfangen eines Rundfunk-Synchronisationssignals der Makrozellenstation, Synchronisieren mit der Makrozellenstation und Erfassen von Konfigurationsinformationen der Makrozellenstation, wobei die Konfigurationsinformationen der Makrozellenstation Systeminformationen der Makrozellenstation umfassen, wobei die Systeminformationen der Makrozellenstation eine Arbeitsfrequenz der Makrozellenstation umfassen; und
ein Konfigurationsmodul, ausgelegt zum Durchführen einer Systemkonfiguration für die Kleinzellenstation gemäß den Konfigurationsinformationen der Makrozellenstation; und
wobei das Konfigurationsmodul ferner zu Folgendem ausgelegt ist:
derartiges Konfigurieren einer Arbeitsfrequenz der Kleinzellenstation, dass sie die gleiche wie die Arbeitsfrequenz der Makrozellenstation ist.

7. Kleinzellenstation nach Anspruch 6, wobei die Systeminformationen der Makrozellenstation ferner ein Aufwärtsstrecke-zu-Abwärtsstrecke-Unterrahmen-Konfigurationsverhältnis im Zeitmultiplex, TDD, umfassen.

8. Kleinzellenstation nach Anspruch 7, wobei das Konfigurationsmodul ferner zu Folgendem ausgelegt ist:
derartiges Konfigurieren eines Aufwärtsstrecke-zu-Abwärtsstrecke-Unterrahmen-Konfigurationsverhältnisses der Kleinzellenstation im Zeitmultiplex, dass es das gleiche wie das Aufwärtsstrecke-zu-Abwärtsstrecke-Unterrahmen-Konfigurationsverhältnis der Makrozellenstation im Zeitmultiplex ist.

9. Kleinzellenstation nach einem der Ansprüche 6 bis 8, wobei die Konfigurationsinformationen der Makrozellenstation ferner eine physische Zellenkennung der Makrozellenstation und Systeminformationen einer Nachbarzelle der Makrozellenstation umfassen und die Systemnachricht der Nachbarzelle der Makrozellenstation mindestens drei physische Zellenkennungen der Nachbarzelle der Makrozellenstation umfassen.

## Revendications

1. Procédé de commande de communication d'une station de petite cellule, le procédé comprenant les étapes de procédé suivantes :
la connexion, par la station de petite cellule à l'aide d'une carte SIM logicielle incorporée ou d'une carte SIM insérée de la station de petite cellule, à une interface radio d'une station de macro-cellule pour accéder à la station de macro-cellule ;
après la réception d'un signal de synchronisation de diffusion de la station de macro-cellule, la synchronisation, par la station de petite cellule, avec la station de macro-cellule, et l'acquisition d'informations de configuration de la station de macro-cellule,
les informations de configuration de la station de macro-cellule comprenant des informations système de la station de macro-cellule, les informations système de la station de macro-cellule comprenant une fréquence de fonctionnement de la station de macro-cellule ; et
la réalisation, par la station de petite cellule, d'une configuration système de la station de petite cellule conformément aux informations de configuration de la station de macro-cellule ;
dans lequel la réalisation, par la station de petite cellule d'une configuration système de la station de petite cellule conformément aux informations de configuration de la station de macro-cellule comprend :
la configuration d'une fréquence de fonctionnement de la station de petite cellule pour qu'elle soit identique à la fréquence de fonctionnement de la station de macro-cellule.

2. Procédé de commande de communication selon la revendication 1, dans lequel les informations système de la station de macro-cellule comprennent en outre un rapport de configuration de sous-trames liaison montante/liaison descendante en duplexage par répartition temporelle, TDD.

3. Procédé de commande de communication selon la revendication 2, dans lequel la réalisation, par la station de petite cellule, d'une configuration système de la station de petite cellule conformément aux informations de configuration de la station de macro-cellule comprend en outre :
la configuration d'un rapport de configuration de sous-trames liaison montante/liaison descendante de la station de petite cellule en multiplexage par répartition temporelle pour qu'il soit identique au rapport de configuration de sous-trames liaison montante/liaison descendante de la station de macro-cellule en multiplexage par répartition temporelle.

4. Procédé de commande de communication selon l'une quelconque des revendications 1 à 3, dans lequel les informations de configuration de la station de macro-cellule comprennent en outre un identifiant de cellule physique de la station de macro-cellule et des informations système d'une cellule voisine de la station de macro-cellule, et les informations système des cellules voisines de la station de macro-cellule comprennent au moins trois identifiants de cellule physique de la cellule voisine de la station de macro-cellule.

5. Procédé de commande de communication selon la revendication 4, dans lequel la réalisation, par la station de petite cellule, d'une configuration système de la station de petite cellule, conformément aux informations de configuration de la station de macro-cellule comprend en outre :
la configuration d'un identifiant de cellule physique configuré de la station de petite cellule différent de tous les identifiants parmi l'identifiant de cellule physique de la station de macro-cellule et les identifiants de cellule physique de la cellule voisine de la station de macro-cellule.

6. Station de petite cellule, la station de petite cellule étant configurée pour se connecter, à l'aide d'une carte SIM logicielle intégrée ou d'une carte SIM insérée, à une interface radio d'une station de macro-cellule pour accéder à la station de macro-cellule, et comprenant :
un module de réception de synchronisation, configuré pour : après la réception d'un signal de synchronisation de diffusion de la station de macro-cellule, se synchroniser avec la station de macro-cellule, et acquérir des informations de configuration de la station de macro-cellule, les informations de configuration de la station de macro-cellule comprenant des informations système de la station de macro-cellule, les informations système de la station de macro-cellule comprenant une fréquence de fonctionnement de la station de macro-cellule; et
un module de configuration, configuré pour réaliser une configuration système de la station de petite cellule conformément aux informations de configuration de la station de macro-cellule ; et
le module de configuration étant configuré en outre pour :
configurer une fréquence de fonctionnement de la station de petite cellule pour qu'elle soit identique à la fréquence de fonctionnement de la station de macro-cellule.

7. Station de petite cellule selon la revendication 6, dans laquelle les informations système de la station de macro-cellule comprennent en outre un rapport de configuration de sous-trames liaison montante/liaison descendante en multiplexage par répartition temporelle, TDD.

8. Station de petite cellule selon la revendication 7, dans laquelle le module de configuration est configuré en outre pour :
configurer un rapport de configuration de sous-trames liaison montante/liaison descendante de la station de petite cellule en multiplexage par répartition temporelle pour qu'il soit identique au rapport de configuration de sous-trames liaison montante/liaison descendante de la station de macro-cellule en multiplexage par répartition temporelle.

9. Station de petite cellule selon l'une quelconque des revendications 6 à 8, dans laquelle les informations de configuration de la station de macro-cellule comprennent en outre un identifiant de cellule physique de la station de macro-cellule et des informations système d'une cellule voisine de la station de macro-cellule, et le message système de la cellule voisine de la station de macro-cellule comprend au moins trois identifiants de cellule physique de la cellule voisine de la station de macro-cellule.
